(19) Europäisches Patentamt
European Patent Office
Office européen des brevets

(11) Veröffentlichungsnummer : **0 481 295 B1**

(12) **EUROPÄISCHE PATENTSCHRIFT**

(45) Veröffentlichungstag der Patentschrift :
**10.08.94 Patentblatt 94/32**

(51) Int. Cl.$^5$ : **C08F 8/30**

(21) Anmeldenummer : **91116906.8**

(22) Anmeldetag : **04.10.91**

# (54) Zur oxidativen Vernetzung befähigte Polymere.

(30) Priorität : **16.10.90 DE 4032783**

(43) Veröffentlichungstag der Anmeldung :
**22.04.92 Patentblatt 92/17**

(45) Bekanntmachung des Hinweises auf die Patenterteilung :
**10.08.94 Patentblatt 94/32**

(84) Benannte Vertragsstaaten :
**AT BE CH DE ES FR GB IT LI NL SE**

(56) Entgegenhaltungen :
**EP-A- 0 129 689**
**DE-A- 1 745 954**
**FR-A- 2 299 347**
**FR-A- 2 395 297**
**FR-A- 2 613 371**

(73) Patentinhaber : **BAYER AG**
**D-51368 Leverkusen (DE)**

(72) Erfinder : **Blum, Harald, Dr.**
**Auf dem Westkamp 1**
**W-4175 Wachtendonk 2 (DE)**
Erfinder : **Fleiter, Lothar, Dr.**
**Bärenstrasse 7**
**W-4150 Krefeld (DE)**

EP 0 481 295 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft zur oxidativen Vernetzung befähigte Polymere, ein Verfahren zur Herstellung derartiger Polymerer durch Umsetzung von Carbonsäureanhydridgruppen aufweisenden Copolymerisaten mit im wesentlichen aus Hydroxyalkylamiden ungesättigter Carbonsäuren bestehenden Reaktionspartnern unter Imidbildung und die Verwendung der Polymeren als Bindemittel für Beschichtungsmittel und Dichtmassen.

Oxidativ trocknende Bindemittel auf Copolymerisatbasis sind bekannt. Sie werden erhalten z.B. durch Veresterung von OH-funktionellen Copolymerisaten mit trocknenden Fettsäuren (DE-OS 27 28 568) oder durch Umsetzung von Glycidylcopolymerisaten mit trocknenden Fettsäuren (GB-PS 793 776 und 12 27 398).

Aufgrund ihres Preises und einiger lacktechnischer Nachteile wie z.B. langsame Trocknung und Problemen beim Überarbeiten, hervorgerufen durch eine Neigung zum Hochziehen des überlackierten Films, konnten sich diese Bindemittel in der Praxis nicht durchsetzen.

Es war die der Erfindung zugrundeliegende Aufgabe, neue, zur oxidativen Vernetzung befähigte Polymere zur Verfügung zu stellen, die aus preiswerten Rohstoffen auf einfache Weise herstellbar sind und den Anforderungen der Praxis bezüglich ihrer anwendungstechnischen Eigenschaften genügen.

Diese Aufgabe konnte mit der Bereitstellung der nachstehend näher beschriebenen erfindungsgemäßen Polymeren gelöst werden. Die erfindungsgemäßen Polymeren stellen Derivate von intramolekulare Carbonsäureanhydridgruppen aufweisenden Copolymerisaten dar. Ihre Herstellung erfolgt durch Umsetzung unter Imidbildung dieser Copolymerisate mit im wesentlichen aus Hydroxyalkylamiden bestehenden Umsetzungsprodukten von Aminoalkoholen mit olefinisch ungesättigten Monocarbonsäuren.

Gegenstand der Erfindung sind zur oxidativen Vernetzung befähigte Polymere, dadurch gekennzeichnet, daß sie 10 bis 80 Gew.-% Struktureinheiten der Formel (I) und/oder (Ia) enthalten

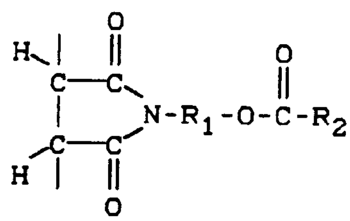

(I)

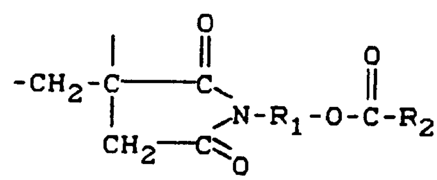

(Ia),

wobei

$R_1$ für einen aliphatischen gesättigten Kohlenwasserstoffrest mit 2 bis 6 Kohlenstoffatomen steht, mit der Maßgabe, daß zwischen dem Stickstoffatom und dem Sauerstoffatom mindestens 2 Kohlenstoffatome angeordnet sind, und

$R_2$ zumindest zu 30 % der Reste $R_2$ für ein- oder mehrfach olefinisch ungesättigte Kohlenwasserstoffreste steht und zum Rest, d.h. bis zu 70 % der Reste $R_2$ gesättigte aliphatische und/oder aromatische Kohlenwasserstoffreste bedeuten, die gegebenenfalls Sauerstoff und/oder Stickstoff als Heteroatome in Form von Ether-, Ester-, Keto-, Urethan-, Harnstoff- und/oder Amidgruppen enthalten, mit der Maßgabe, daß der Gehalt der Polymeren an olefinisch ungesättigten, in dem Rest $R_2$ vorliegenden Doppelbindungen, berechnet als C=C (Molekulargewicht = 24) mindestens 2,0 Gew.-% beträgt.

Gegenstand der Erfindung ist auch ein Verfahren zur Herstellung dieser Polymeren, welches dadurch gekennzeichnet ist, daß man

a) intramolekulare Carbonsäureanhydridgruppen der Formeln (VI) oder (VIa)

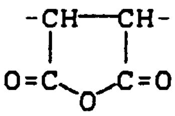 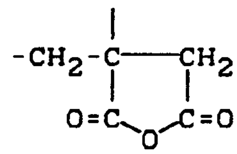

(VI) (VIa)

aufweisende Copolymerisate des Molekulargewichts Mw 4500 bis 100 000 und eines Anhydridäquivalentgewichts von 240 bis 1960 von olefinisch ungesättigten, intramolekularen Carbonsäureanhydriden mit anderen olefinisch ungesättigten Monomeren

mit

b) im wesentlichen aus Hydroxyalkylamiden der Formel (VII)

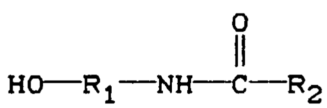

(VII)

bestehenden Umsetzungsprodukten aus Aminoalkoholen der Formel (VIII)

$$HO\text{-}R_1\text{-}NH_2 \qquad (VIII)$$

und Monocarbonsäuren der Formel (IX)

$$R_2\text{-}COOH \qquad (IX)$$

bei 80 bis 200°C unter Imidbildung zur Reaktion bringt, wobei die Reaktionspartner in einem solchen Mengenverhältnis eingesetzt werden, das einem Molverhältnis von Anhydridgruppen der Komponente a) zu in der Komponente b) organisch gebundenem Stickstoff von 1:0,5 bis 1:1,5 entsprechen, und wobei $R_1$ und $R_2$ die oben genannte Bedeutung haben.

Gegenstand der Erfindung ist auch die Verwendung dieser Polymeren als Bindemittel oder Bindemittelkomponente für Beschichtungsmittel oder Dichtmassen.

Die als Ausgangsmaterialien a) für das erfindungsgemäße Verfahren eingesetzten Copolymerisate weisen ein, nach der Methode der Gelpermeationschromatographie unter Verwendung von Polystyrol als Standard bestimmbares, Molekulargewicht Mw von 4500 bis 100 000, vorzugsweise 8000 bis 50 000 und ein Anhydridäquivalentgewicht von 240 bis 1960, vorzugsweise 320 bis 1250 auf. Unter "Anhydridäquivalentgewicht" ist hierbei das Gewicht in g zu verstehen, welches einem Mol an einpolymerisierten intramolekularen Säureanhydridgruppen entspricht.

Die Herstellung der Copolymerisate a) erfolgt durch radikalisch initiierte Copolymerisation von olefinisch ungesättigten intramolekularen Dicarbonsäureanhydriden mit beliebigen anderen olefinisch ungesättigten Monomeren.

Vorzugsweise gelangt bei dieser Copolymerisation ein Monomerengemisch, bestehend aus

a1) 3 bis 40 Gew.-Teilen copolymerisierbaren Dicarbonsäureanhydriden wie z.B. Itaconsäureanhydrid oder Maleinsäureanhydrid, vorzugsweise Maleinsäureanhydrid,

a2) 5 bis 50 Gew.-Teilen Monomeren, ausgewählt aus der Gruppe bestehend aus Vinylaromaten, Isopropenylaromaten, Vinylestern, Vinylethern und beliebigen Gemischen derartiger Monomerer,

a3) 25 bis 92 Gew.-Teilen an Monomeren, ausgewählt aus der Gruppe bestehend aus Acrylsäureestern mit 1 bis 18 Kohlenstoffatomen im Alkoholrest, Methacrylsäureestern mit 1 bis 18 Kohlenstoffatomen im Alkoholrest und beliebigen Gemischen derartiger Monomerer

a4) 0 bis 7 Gew.-Teilen an mindestens difunktionellen Monomeren wie z.B. Divinylbenzol, Hexandiolbisacrylsäureestern, TMP-trisacrylat usw. und

a5) 0 bis 25 Gew.-Teile Polybutadiene des Molekulargewichtsbereichs Mn = 500 bis 3000, wie z.B. Polyöl 110 (Hersteller. Chemische Werke Hüls AG)

zum Einsatz, wobei sich die genannten Gewichtsteile zu 100 ergänzen.

Geeignete Monomere aus der Gruppe a2) sind beispielsweise Styrol, α-Methylstyrol, Vinyltoluol, am aromatischen Ring $C_1$-$C_4$-alkylsubstituierte Styrole, Vinylacetat, Vinylpropionat, Vinylbutyrat, Ethylvinylether, Butylvinylether.

Geeignete Monomere aus der Gruppe a3) sind beispielsweise Ethylacrylat, n-Butylacrylat, iso-Butylacrylat, n-Propylacrylat, n-Pentylacrylat, iso-Propylacrylat, Hexylacrylat, 2-Ethylhexylacrylat, n-Octylacrylat, Laurylacrylat, 2-Phenylethylacrylat, Benzylacrylat, Stearylacrylat, Cyclohexylacrylat, n-Octylmethacrylat, 2-Ethylhexylmethacrylat, Laurylmethacrylat, Caprinmethacrylat, Stearylmethacrylat, Methylmethacrylat, Ethylmethacrylat, n-Butylmethacrylat, iso-Butylmethacrylat, n-Hexylmethacrylat- oder Cyclohexylmethacrylat.

Bevorzugt zur Herstellung der Copolymerisate a) Monomerengemische folgender Zusammensetzung eingesetzt, wobei sich die nachstehenden Prozentangaben zu 100 ergänzen:

a1) 14 bis 30 Gew.-% Maleinsäureanhydrid,

a2) insgesamt 15 bis 35 Gew.-% Styrol und

a3) insgesamt 35 bis 65 Gew.-% n-Butylacrylat, 2-Ethylhexylacrylat, 2-Ethylhexylmethacrylat, Methylmethacrylat und/oder n-Butylmethacrylat.

Die Herstellung der Copolymerisate erfolgt durch eine radikalisch initiierte Copolymerisation der Monomermischungen vorzugsweise in organischer Lösung bei Festgehalten von 30 bis 90 %.

Geeignete Lösungsmittel sind z.B. Butylacetat, Solvent-Naphtha, Testbenzin, Xylol, Toluol sowie Gemische dieser und anderer nicht anhydridreaktiver Lösemittel.

Als Initiatoren geeignet sind organische Peroxide wie z.B. Dibenzoylperoxid, Di-tert.-Butylperoxid, tert.-Butylperoxy-2-ethylhexanoat (tert.-Butylperoctoat), Didecanoylperoxid und Azoverbindungen wie z.B. Azodiisobuttersäurenitril in Mengen von 0,5 bis 10 Gew.-%, vorzugsweise 3 bis 6 Gew.-%, bezogen auf das Gewicht der eingesetzten Monomeren.

Zur Erzielung des gewünschten Molekulargewichtes können auch Regler wie z.B. n-Dodecylmercaptan in Mengen von 0,01 bis 5 Gew.-% mitverwendet werden.

Die Copolymerisation wird im allgemeinen bei einer Temperatur von 60 bis 180°C, vorzugsweise 110 bis 160°C durchgeführt.

Dabei wird üblicherweise das Lösungsmittel und gegebenenfalls ein Teil der Monomerenmischung vorgelegt und auf die gewünschte Reaktionstemperatur erwärmt. Die restliche Monomerenmischung und der Initiator werden während 3 bis 6 Stunden kontinuierlich zudosiert.

Die so hergestellten, intramolekulare Anhydridgruppen aufweisenden Copolymerisate werden dann mit Umsetzungsprodukten b) von Aminoalkoholen und Monocarbonsäuren umgesetzt.

Diese Umsetzungsprodukte b) bestehen im wesentlichen aus Verbindungen der Formel (VII)

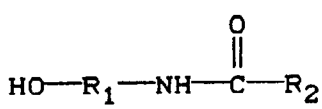

(VII),

sowie gegebenenfalls in untergeordneten Mengen der Formel (VIIa)

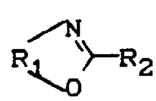

(VIIa).

In diesen Formeln haben $R_1$ und $R_2$ die bereits obengenannte Bedeutung. Vorzugsweise stehen $R_1$ hier und auch vor- und nachstehend für einen gesättigten aliphatischen Kohlenwasserstoffrest mit 2 oder 3 Kohlenstoffatomen und $R_2$ für einen einfach und/oder mehrfach ungesättigten aliphatischen Kohlenwasserstoffrest mit 4 bis 20 Kohlenstoffatomen.

Die Herstellung der Umsetzungsprodukte b) erfolgt durch eine Kondensationsreaktion zwischen Aminoalkoholen der Formel (VIII)

$$HO\text{-}R_1\text{-}NH_2 \qquad (VIII)$$

mit Carbonsäuren der Formel

$$R_2\text{-}COOH \qquad (IX).$$

Geeignete Aminoalkohole der Formel (VIII) sind beispielsweise 1-Amino-2-ethanol, 1-Amino-2-propanol, 1-Amino-3-propanol, 2-Amino-1-propanol, 1-Amino-2-butanol, 1-Amino-3-butanol, 2-Amino-1-butanol, 2-Amino-3-butanol, 3-Amino-1-butanol, 1-Amino-2-hexanol, 2-Amino-1-hexanol, 2-Amino-2-methylpropanol, wobei 1-Amino-2-ethanol, 1-Amino-2-propanol und 2-Amino-1-propanol besonders bevorzugt sind.

Geeignete Carbonsäuren der Formel (IX) sind beispielsweise Ölsäure, Lauroleinsäure, Myristoleinsäure,

Palmitoleinsäure, Gadoleinsäure, Erucasäure, Ricinusfettsäure, Ricinenfettsäure, Linolsäure, Linolensäure, Arachidonsäure, Sorbinsäure, natürliche Fettsäuregemische wie z.B. Sonnenblumenfettsäure, Sojaölfettsäure, Leinölfettsäure, Erdnußfettsäure, Tallölfettsäure, Palmölfettsäure, gesättigte Monocarbonsäuren wie 2-Ethylhexansäure, Benzoesäure, Isononansäure, wobei ungesättigte, insbesondere mehrfach ungesättigte Monocarbonsäuren der beispielhaft genannten Art besonders bevorzugt sind, und wobei gesättigte Monocarbonsäuren nur in Kombination mit ungesättigten Monocarbonsäuren eingesetzt werden.

Die beispielhaft genannten Monocarbonsäuren können, der oben gemachten Definition des Rest $R_2$ entsprechend, auch in Abmischung mit beliebigen Ether-, Ester-, Keto-, Urethan-, Harnstoff- oder Amidgruppen aufweisenden Monocarbonsäuren zur Anwendung gelangen, obwohl dies keineswegs bevorzugt ist.

Die bei der Herstellung der Umsetzungsprodukte b) zum Einsatz gelangenden Monocarbonsäuren bestehen zumindest zu 30 Mol-%, vorzugsweise ausschließlich aus zumindest einfach, vorzugsweise mehrfach olefinisch ungesättigten aliphatischen Monocarbonsäuren mit 5 bis 21, insbesondere 15 bis 21 Kohlenstoffatomen, d.h. $R_2$ steht bevorzugt für ein- und/oder mehrfach ungesättigte Kohlenwasserstoffreste mit 4 bis 20, insbesondere 14 bis 20 Kohlenstoffatomen.

Bei der Umsetzung der Aminoalkohole mit den Monocarbonsäuren werden die Reaktionspartner in Mengenverhältnissen eingesetzt, die einem Molverhältnis Aminoalkohol : Monocarbonsäure von 1:1 bis 2:1, vorzugsweise 1:1 bis 1,2:1 entsprechen.

Die Reaktion wird gegebenenfalls unter Verwendung geeigneter Schleppmittel wie Solvent Naphtha, Xylol, Toluol, Benzin unter Wasserabspaltung solange durchgeführt, bis das Reaktionsprodukt eine Säurezahl <3, vorzugsweise <1 aufweist. Gegebenenfalls werden anschließend Schleppmittel und überschüssiger Aminoalkohol destillativ abgetrennt.

Für den Fall, daß überschüssiger Aminoalkohol nicht abdestilliert wird, muß die bei der erfindungsgemäßen Umsetzung eingesetzte Menge des Umsetzungsprodukts b) so berechnet werden, daß auch der überschüssige Aminoalkohol mit Anhydridgruppen der Copolymerisate a) abreagieren kann. Dabei ist es angezeigt, die Konzentration der Reaktionslösung möglichst niedrig zu halten, um die Gefahr der Vernetzung zu minimieren. Auf diese Art und Weise können zusätzlich Hydroxylgruppen, die über Imidstrukturen entsprechend den Formeln (X) bzw. (Xa)

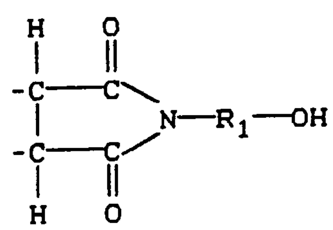

(X)

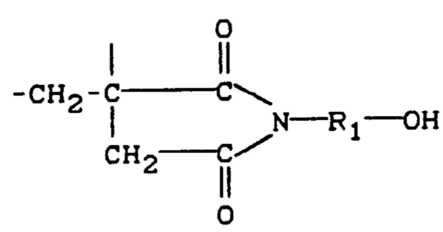

(Xa)

gebunden sind, in das Polymer eingebaut werden. Diese Hydroxylgruppen können dann gewünschtenfalls mit zugesetzten Vernetzungsmitteln wie beispielsweise organischen Polyisocyanaten für eine zusätzliche Vernetzungsreaktion herangezogen werden.

Die erfindungswesentliche Umsetzung zwischen anhydridfunktionellen Copolymerisaten a) mit den genannten Reaktionsprodukten aus Aminoalkohol und Monocarbonsäuren b) erfolgt im allgemeinen bei Reaktionstemperaturen von 80 bis 200°C, wobei üblicherweise derart vorgegangen wird, daß das in organischen Lösungsmitteln der beispielhaft genannten Art gelöste Copolymer bei Temperaturen von 80 bis 150°C mit dem Reaktionsprodukt versetzt und das Reaktionsgemisch dann solange am Wasserabscheider bei 100 bis 200°C erhitzt wird, bis die Säurezahl des Endprodukts maximal 25, vorzugsweise maximal 10 beträgt. Die Reaktionspartner kommen hierbei in solchen Mengenverhältnissen zum Einsatz, die einem Molverhältnis von Anhydridgruppen der Copolymerisate a) zu in der Komponente b) chemisch gebundenem Stickstoff von 1:0,5 bis 1:1,5, vorzugsweise 1:1,05 bis 1:1,25 entsprechen, wobei gegebenenfalls in der Komponente b) vorliegende überschüssige Mengen an Aminoalkohol der Formel (VIII) mit in die Berechnung eingehen.

In manchen Fällen kann es sinnvoll sein, nach Beendigung der Umsetzung eine zusätzliche geringe Menge an Umsetzungsprodukt aus Aminoalkohol und Monocarbonsäure zuzusetzen, um die Säurezahl des Endprodukts zu reduzieren.

Nach Beendigung der Umsetzung kann die Viskosität des Endprodukts durch Zugabe von geringen Lösungsmittelmengen eingestellt werden. Im allgemeinen gelangen die erfindungsgemäßen Polymeren in Form

von 30- bis 90-gew.-%igen Lösungen in geeigneten Lösungsmitteln zum Einsatz. Geeignete Lösungsmittel sind neben den schon bei der Herstellung eingesetzten z.B. Methoxypropylacetat, Butanol, Hexanol, Pentanol, Propanol, Ethanol, Methylisobutylketon, N-Methylpyrrolidon, Ethylacetat oder beliebige Gemische dieser und-/oder der bereits obengenannten Lösungsmittel.

Während der erfindungsgemäßen Umsetzung erfolgt im wesentlichen eine Umlagerung der in den Verbindungen (VII) vorliegenden Amidgruppen in Estergruppen, wobei das ursprüngliche Amid-Stickstoffatom das Imid-Stickstoffatom der Strukturen (I) bzw. (Ia) bildet.

Die erfindungsgemäßen Polymeren enthalten daher 10 bis 80 Gew.-% an Struktureinheiten der Formel (I) bzw. (Ia), vorzugsweise 30 bis 66 Gew.-% an Struktureinheiten der Formel (I).

Die erfindungsgemäßen Polymeren enthalten somit im allgemeinen, d.h. von wenigen, außerhalb dieser Definition liegenden, weniger bevorzugten Varianten abgesehen,

a) 30 bis 66 Gew.-% an wiederkehrenden Struktureinheiten der Formel (I),

b) 3 bis 30 Gew.-% an wiederkehrenden Struktureinheiten der Formel (II)

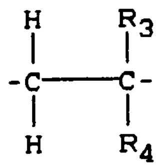

(II),

c) 15 bis 67 Gew.-% an wiederkehrenden Struktureinheiten der Formeln (III) und/oder (IV)

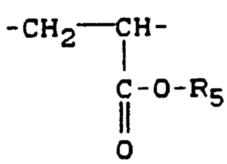

(III)

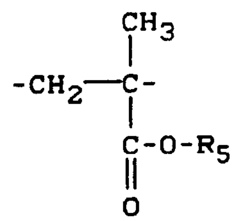

(IV)

und

d) 0 bis 15 Gew.-% an Struktureinheiten der Formel (V)

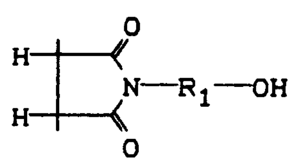

(V)

wobei sich die genannten Prozentsätze zu 100 ergänzen und wobei

$R_1$ und $R_2$ die bereits obengenannte Bedeutung bzw. bevorzugte Bedeutung haben,

$R_3$ für Wasserstoff, eine Methyl- oder Ethylgruppe, oder für Chlor oder Fluor, vorzugsweise jedoch für Wasserstoff steht,

$R_4$ für einen aliphatischen Kohlenwasserstoffrest mit 2 bis 15 Kohlenstoffatomen, einen cycloaliphatischen Kohlenwasserstoffrest mit 5 bis 10 Kohlenstoffatomen, einen aromatischen Kohlenwasserstoffrest mit 6 bis 12 Kohlenstoffatomen, eine Nitrilgruppe oder einen Ester-, Ether-, Amid-, Urethan- oder Ketogruppen enthaltenden organischen Rest mit 1 bis 6 Kohlenstoffatomen steht, vorzugsweise jedoch einen Phenylrest bedeutet,

$R_5$ für einen gesättigten aliphatischen Kohlenwasserstoffrest mit 1 bis 18 Kohlenstoffatomen, vorzugsweise mit 1 bis 10 Kohlenstoffatomen steht.

Im übrigen werden Art und Mengenverhältnisse der bei der Herstellung der erfindungsgemäßen Polymeren eingesetzten Ausgangsmaterialien im Rahmen des erfindungsgemäßen Verfahrens so gewählt, daß die erfindungsgemäßen Verfahrensprodukte innerhalb der Reste $R_2$ olefinische Doppelbindungen in einer solchen Menge enthalten, daß der Gehalt der Verfahrensprodukte an innerhalb dieser Reste vorliegenden olefinischen Doppelbindungen (berechnet als C=C Molekulargewicht = 24) bei 2,0 bis 10,0, vorzugsweise 3,5 bis 8,0 Gew.-% liegt.

Die erfindungsgemäßen Polymeren können direkt ohne weitere Zusätze als Bindemittel für die Herstellung von klaren Überzügen eingesetzt werden.

In der Regel werden jedoch Pigmente und übliche Zusatzstoffe wie Trocknungsbeschleuniger, Antioxidantien, Hautverhinderungsmittel, Viskositätsstabilisatoren, Netzmittel, Verlaufsmittel, Füllstoffe usw. zugegeben.

Bevorzugte Trocknungsbeschleuniger sind die an sich bekannten Sikkative, d.h. Salze von (cyclo)aliphatischen Monocarbonsäuren mit 6 bis 18 Kohlenstoffatomen mit Metallen wie beispielsweise Cobalt, Mangan, Nickel, Chrom, Zink, Zirkonium, Aluminium, Calcium, Barium und Blei.

Pigmente, Zusatzstoffe und erfindungsgemäßes Bindemittel werden zusammen in bekannter Weise zu fertigen Lacken angerieben.

Als Mahlaggregat können z.B. Sandmühle, Perlmühle, Kugelmühle oder Dreiwalze verwendet werden.

Die erfindungsgemäßen Polymeren können in oder als lufttrocknende Beschichtungsmittel für Kunststoffe, Metalle, Glas, Holz, Papier, Pappe und Keramik verwendet werden. Weitere Verwendungsmöglichkeiten sind die Anwendung der Bindemittel in Druckfarben für Textil oder Leder bzw. in Imprägnier- oder Verfestigungsmitteln für Papier, Textilien oder Leder.

Die Überzugsmittel können nach herkömmlichen Techniken, z.B. Flut-, Tauch-, Spritz-, Streich-, Gieß- und Walzauftrag aufgebracht werden.

Die Verarbeitung von erfindungsgemäße Polymere als Bindemittel enthaltenden Beschichtungsmitteln oder Dichtmassen und deren anschließende oxidative Vernetzung erfolgt im allgemeinen bei Raumtemperatur. Zur Beschleunigung der Trockenzeit ist jedoch auch eine forcierte Wärmetrocknung bei etwa 60 bis 120°C für 5 bis 30 Minuten möglich.

In den nachstehenden Beispielen sind Angaben über Teile und Prozente Gewichtsangaben und beziehen sich auf die nichtflüchtigen Feststoffe, falls nicht ausdrücklich etwas anderes festgestellt wird.

## Beispiele

### Herstellung der Monocarbonsäure-Aminoalkohol-Umsetzungsprodukte:

#### Produkt A

In einem 3-l-Reaktionsgefäß mit Rühr-, Kühl- und Heizvorrichtung werden unter $N_2$-Atmosphäre 840 g (3 Mol) Sojaölfettsäure und 840 g (3 Mol) einer konjugiert-ungesättigten $C_{18}$-Monocarbonsäure (Konjuvandol-Fettsäure, Hersteller: Henkel AG) vorgelegt, 366 g (6 Mol) Aminoethanol bei Raumtemperatur zugegeben und die Reaktionsmischung in 2 Stunden auf 150°C aufgeheizt. Unter ständiger Wasserabspaltung wird die Temperatur bis auf 150°C gesteigert und solange gehalten, bis die SZ ≦1 ist. Dabei werden 114 g Wasser abgespalten.

#### Produkt B

In einem 2-l-Reaktionsgefäß mit Rühr-, Kühl- und Heizvorrichtung werden unter $N_2$-Atmosphäre 1260 g (4,5 Mol) Sojaölfettsäure vorgelegt, 288,2 g (4,725 Mol) Aminoethanol bei Raumtemperatur zugegeben und die Reaktionsmischung in 2 Stunden auf 150°C aufgeheizt. Unter ständiger Wasserabspaltung wird die Temperatur bis auf 190°C gesteigert und solange gehalten, bis die SZ ≦1 ist. Dabei werden 93 g Wasser abgespalten.

Durch Anlegen eines leichten Vakuums wird das Reaktionsprodukt von überschüssigem Aminoethanol befreit.

#### Produkt C

In einem 5-l-Reaktionsgefäß mit Rühr-, Kühl- und Heizvorrichtung werden unter $N_2$-Atmosphäre 1680 g (6 Mol) Sojaölfettsäure, 1680 g (6 Mol) Erdnußölfettsäure und 122 g (1 Mol) Benzoesäure vorgelegt. Bei 60°C werden 975 g (13 Mol) 1-Amino-2-propanol zugegeben und die Reaktionsmischung langsam unter Wasserabspaltung auf 190°C aufgeheizt. Die Reaktion wird solange durchgeführt bis die Säurezahl ≦1 beträgt, die

abgespaltene Wassermenge ist 263 g.

Beispiel 1

In einem 4-l-Reaktionsgefäß mit Rühr-, Kühl- und Heizvorrichtung werden unter $N_2$-Atmosphäre 1088 g Solvent Naphtha vorgelegt und auf 132°C erhitzt, Eine Mischung aus 190 g (19 Gew'-%) Maleinsäureanhydrid, 150 g (15 Gew.-%) n-Butylacrylat, 280 g (28 Gew'-%) Methylmethacrylat, 270 g (27 Gew.-%) Styrol und 60 g (6 Gew'-%) n-Butylmethacrylat wird in 2 Stunden und parallel dazu 71 g (5 Gew'-%) tert.-Butylperoctoat (70 %ig in einem Kohlenwasserstoffgemisch) und 33 g Solvent Naphtha in 2 1/2 Stunden zudosiert, anschließend wird 1 Stunde bei 130°C gerührt. Die Copolymerisat-Lösung hat einen Festgehalt von 46,5 %.

Nach Abkühlen auf 120°C werden insgesamt 714 g Monocarbonsäure-Aminoalkohol-Umsetzungsprodukt A in 3 gleichgroßen Portionen in Abstand von 2 Stunden zugegeben. Der Ansatz wird dabei unter Wasserabspaltung bis auf 165°C erhitzt und solange gehalten bis die Säurezahl der Harzlösung ca. 3 beträgt. Nach Zugabe von 26 g Hautverhinderungsmittel Ascinin R conz (Bayer AG) wird mit Solvent Naphtha auf einen Festgehalt von 62 % bei einer Viskosität bei 23°C von 1100 mPa.s verdünnt.

Das Äquivalentverhältnis von im Copolymerisat eingebautem Anhydrid zu dem zugesetzten Monocarbonsäure-Aminoalkohol-Umsetzungsprodukt (gerechnet als Monocarbonsäureethanolamid gleichbedeutend mit dem Molverhältnis von Anhydridgruppen zu Stickstoff) liegt bei 1:1,13.

Das Polymer enthält ca. 48 Gew.-% der Struktureinheit I

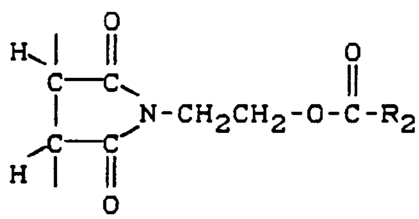

I

Beispiel 2

In einem 4-l-Reaktionsgefäß mit Rühr-, Kühl- und Heizvorrichtung werden unter $N_2$-Atmosphäre 1088 g Xylol und 190 g (19 Gew.-%) Maleinsäureanhydrid vorgelegt und auf 130°C erhitzt.

Eine Monomermischung aus 150 g (15 Gew'-%) n-Butylacrylat, 280 g (28 Gew.-%) Methylmethacrylat, 270 g (27 Gew.-%) Styrol und 60 g (6 Gew.-%) n-Butylmethacrylat wird in 2 Stunden und parallel dazu eine Mischung aus 71 g (5 Gew.-%) 70 %igem tert.-Butylperoctoat und 33 g Xylol in 2 1/2 Stunden zudosiert. Nach 1 Stunde Rühren bei 130°C wird auf 120°C abgekühlt und insgesamt 714 g Monocarbonsäure-Aminoalkohol-Umsetzungsprodukt A in 3 gleichgroßen Portionen im Abstand von jeweils 2 Stunden zugegeben. Der Ansatz wird dann unter Wasserabspaltung bis auf 145°C erhitzt und solange gehalten bis die SZ = 4 erreicht ist. Nach Zugabe von 26 g Hautverhinderungsmittel Ascinin R conz (Bayer AG) wird mit Solvent Naphtha auf einen Feststoffgehalt von 60 % verdünnt. Die resultierende Lösung weist bei 23°C eine Viskosität von 600 mPa.s auf.

Das Polymer enthält etwa 48 Gew.-% der Struktureinheit I.

Beispiel 3

In einem 4-l-Reaktionsgefäß mit Rühr-, Kühl- und Heizvorrichtung werden unter $N_2$-Atmosphäre 883 g Xylol und 82,5 g (8,25 Gew.-%) Maleinsäureanhydrid vorgelegt und auf 130°C erhitzt. Eine Mischung aus 165 g (16,5 Gew.-%) Maleinsäureanhydrid, 231 g (23,1 Gew.-%) n-Butylacrylat, 263 g (26,3 Gew.-%) Methylmethacrylat und 220 g (22,0 Gew.-%) Styrol wird in 2 Stunden und parallel dazu 55 g (3,85 Gew.-%) 70 %iges tert.-Butyl-peroctoat in 2 1/2 Stunden zudosiert. Nach einer Stunde Rühren bei 130°C wird auf 120°C abgekühlt und insgesamt 961,5 g Monocarbonsäure-Aminoalkohol-Umsetzungsprodukt A in 3 gleichgroßen Portionen im Abstand in jeweils 2 Stunden zugegeben. Die Reaktionsmischung wird dabei bis auf 150°C erhitzt und solange gehalten, bis die Säurezahl 7 erreicht ist. Nach Zugabe von Xylol erhält man das Polymer 3) als 62 %ige Lösung bei einer Viskosität von 4500 mPa.s/23°C.

Das Polymer enthält etwa 60 Gew.-% der Struktureinheit I.

Beispiel 4

In einem 4-l-Reaktionsgefäß mit Rühr-, Kühl- und Heizvorrichtung werden 985 g Testbenzin (aliphatisches

Kohlenwasserstoffgemisch mit einem Siedebereich von 155 bis 185°C) vorgelegt und auf 128°C erhitzt. Eine Mischung aus 225 g (22,5 Gew.-%) Maleinsäureanhydrid, 210 g (21 Gew.-%) n-Butylacrylat, 330 g (33 Gew.-%) Methylmethacrylat und 200 g (20 Gew.-%) Styrol wird in 2 Stunden und parallel dazu 50 g (3,5 Gew.-%) 70 %iges tert.-Butylperoctoat in 2 1/2 Stunden zudosiert. Nach 1 Stunde Rühren bei 130°C wird auf 120°C abgekühlt und dann insgesamt 874,5 g Monocarbonsäure-Aminoalkohol-Umsetzungsprodukt B in 3 gleichgroßen Portionen im Abstand von jeweils 2 Stunden zugegeben. Die Reaktionsmischung wird dabei bis auf 160°C erhitzt und solange gehalten bis eine Säurezahl von ca. 7 erreicht ist.

Nach Zugabe von Testbenzin erhält man das Bindemittel 4) als 60 %ige Lösung mit einer Viskosität von 11 700 mPa.s/23°C.

Das Polymer enthält etwa 60 Gew.-% der Struktureinheit I.

Beispiel 5

1500 g der in Beispiel 1 beschriebenen anhydridfunktionellen Copolymerisatlösung werden wie in Beispiel 1 beschrieben mit insgesamt 501 g Monocarbonsäure-Aminoalkohol-Umsetzungsprodukt C zur Reaktion gebracht.

Die Umsetzung wird solange durchgeführt bis die Säurezahl 5 erreicht ist. Man erhält das Bindemittel 5) als 57,5 %ige Lösung bei einer Viskosität von 1400 mPa.s/23°C.

Das Polymer enthält etwa 52 Gew.-% der Struktureinheit I

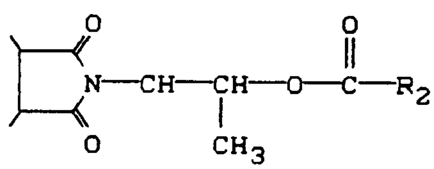

I

Beispiel 6

In einem 4-l-Reaktionsgefäß mit Rühr-, Kühl- und Heizvorrichtung werden unter $N_2$-Atmosphäre 801 g Xylol auf 128°C erhitzt. Eine Mischung aus 300 g (30 Gew.-%) Maleinsäureanhydrid, 290 g (29 Gew.-%) n-Butylacrylat, 170 g (17 Gew.-%) Methylmethacrylat und 200 g (20 Gew.-%) Styrol wird in 1 Stunde und parallel dazu 57 g (4,0 Gew.-%)70 %iges tert.-Butylperoctoat in 1 1/2 Stunden zudosiert. Nach 1 Stunde Rühren wird auf 120°C abgekühlt und 969 g Monocarbonsäure-Aminoalkohol-Umsetzungsprodukt B auf einmal zugegeben. Die Reaktionsmischung wird unter Wasserabspaltung bis auf 148°C erhitzt und solange gehalten, bis die SZ 23 beträgt, dann werden nochmals 155 g Vorstufe B zugegeben und bis auf 154°C solange erhitzt bis eine Säurezahl von etwa 9 erreicht ist. Nach Verdünnen mit Xylol erhält man das Bindemittel 6) als 59 %ige Lösung bei einer Viskosität von 1900 mPa.s/23°C.

Das Polymer enthält etwa 66 Gew.-% der Struktureinheit I.

Verwendung

Die Herstellung von titandioxidhaltigen Weißlacken mit den Bindemitteln aus den Beispielen 1 bis 6 erfolgt in der üblichen Weise. Das Bindemittel: Titandioxid-Verhältnis ist 1:0,8. Als Trocknungshilfsmittel werden Ca-octoat, Co-octoat und Pb-octoat eingesetzt. Falls nicht schon bei der Bindemittelherstellung geschehen, wurde noch ein Hautverhinderungsmittel zugesetzt. Das in einem Mischbehälter vorgemischte Mahlgut wird nach Zugabe von etwas Lösemittel auf einer Perlmühle angerieben und mit einem Testbenzin/Xylol-Gemisch zunächst auf etwa 100 Sekunden Auslaufzeit, gemessen im DIN-4-mm-Becher, verdünnt.

Vor der Applikation wird auf Spritzviskosität (etwa 25 bis 30 Sekunden Auslaufzeit) verdünnt. Die Lacke wurden auf gereinigte Glasplatten, auf mit einem handelsüblichen Füller beschichtete Stahlbleche und direkt auf gereinigte Stahlbleche appliziert. Dabei wurden folgende Ergebnisse erhalten:

| Beispiel | 1 | 2 | 3 | 4 | 5 | 6 |
|---|---|---|---|---|---|---|
| Lackfestkörper (100 Sek. Auflaufzeit DIN-4-mm-Becher) | 63 % | 70 % | 55 % | 59 % | 60 % | 60 % |
| Trocknung (Std.) (180 µm Naßfilm, Raumtemperatur) | 2,5 | 2 | 3 | 2,5 | 3 | 3 |
| Glanz nach Gardner (20°) | 79 | 80 | 76 | 72 | 80 | 79 |
| Griffigkeit [1] | 0 | 0 | 0 | 0 | 0 | 0 |
| Pendelhärte nach König (Sek.) | | | | | | |
| 2 Tage RT | 32 | 24 | 21 | 60 | 36 | 20 |
| 7 Tage RT | 52 | 45 | 27 | 84 | 55 | 24 |
| Elastizität nach Erichsen (mm) | | | | | | |
| nach 1 Tag 70° C | 9,0 | 9,0 | 9,0 | 7,5 | 9,0 | 9,0 |
| Superbenzinfestigkeit [2] 1 Min. nach 16 Std. RT | 4 | 4 | 2 | 3 | 4 | 4 |
| Haftung [3] auf Stahlbleche nach 3 Tagen RT | 0 | 0 | 1 | 0 | -* | -* |

* nicht geprüft

1) Griffigkeit: 0 = kein Griff
5 = klebrig

2) Superbenzinfestigkeit: 0 = ohne Befund
5 = stark angelöst

3) Haftung: Gitterschnitt nach DIN 53 151
0 = günstigster Wert
5 = ungünstigster wert

Die mit den erfindungsgemäßen Bindemitteln hergestellten Weißlacke trocknen rasch zu Überzügen mit sehr gutem Glanz, guten mechanischen Eigenschaften und guter Haftung. Nach 16 Stunden Trocknung bei Raumtemperatur ist die oxidative Vernetzung mittels Luftsauerstoff schon deutlich fortgeschritten, die Filme zeigen bereits eine gewisse Superbenzinfestigkeit und haben keinen Griff mehr.

**Patentansprüche**

1. Zur oxidativen Vernetzung befähigte Polymere, dadurch gekennzeichnet, daß sie 10 bis 80 Gew.-% Struktureinheiten der Formel (I) und/oder (Ia) enthalten

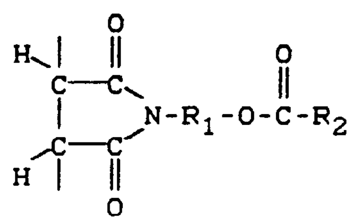

(I)

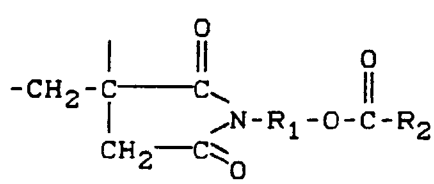

(Ia),

wobei
$R_1$ für einen aliphatischen gesättigten Kohlenwasserstoffrest mit 2 bis 6 Kohlenstoffatomen steht, mit der Maßgabe, daß zwischen dem Stickstoffatom und dem Sauerstoffatom mindestens 2 Kohlenstoffatome angeordnet sind, und
$R_2$ zumindest zu 30 % der Reste $R_2$ für ein- oder mehrfach olefinisch ungesättigte Kohlenwasserstoffreste steht und bis zu 70 % der Reste $R_2$ gesättigte aliphatische und/oder aromatische Kohlenwasserstoffreste bedeuten, die gegebenenfalls Sauerstoff und/oder Stickstoff als Heteroatome in Form von Ether-, Ester-, Keto-, Urethan-, Harnstoff- und/oder Amidgruppen enthalten, mit der Maßgabe, daß der Gehalt der Polymeren an olefinisch ungesättigten, in dem Rest $R_2$ vorliegenden Doppelbindungen, berechnet als =C=C= (Molekulargewicht = 24) mindestens 2,0 Gew.-% beträgt.

2. Zur oxidativen Vernetzung befähigte Polymere gemäß Anspruch 1, dadurch gekennzeichnet, daß sie 30 bis 66 Gew.-% der Struktureinheit I enthalten, wobei $R_1$ für einen aliphatischen, gesättigten Kohlenwasserstoffrest mit 2 oder 3 Kohlenstoffatomen steht und $R_2$ für ein- und/oder mehrfach ungesättigte Kohlenwasserstoffreste mit 4 bis 20 Kohlenstoffatomen steht.

**3.** Zur oxidativen Vernetzung befähigte Polymere gemäß Anspruch 1, dadurch gekennzeichnet, daß sie

a) 30 bis 66 Gew.-% an wiederkehrenden Struktureinheiten der Formel (I),

b) 3 bis 30 Gew.-% an wiederkehrenden Struktureinheiten der Formel (II)

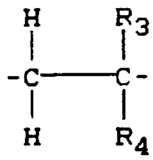

(II),

c) 15 bis 67 Gew.-% an wiederkehrenden Struktureinheiten der Formeln (III) und/oder (IV)

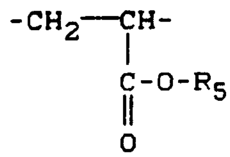

(III)

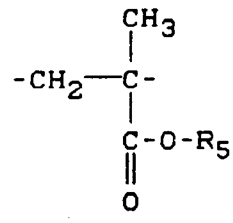

(IV)

und

d) 0 bis 15 Gew.-% an Struktureinheiten der Formel (V)

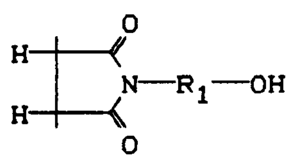

(V)

enthalten, wobei sich die genannten Prozentsätze zu 100 ergänzen und wobei $R_1$ und $R_2$ die in Anspruch 1 genannte Bedeutung haben,

$R_3$ für Wasserstoff, eine Methyl- oder Ethylgruppe oder für Fluor oder Chlor steht,

$R_4$ für einen gesättigten aliphatischen Kohlenwasserstoffrest mit 2 bis 15 Kohlenstoffatomen, einen gesättigten cycloaliphatischen Kohlenwasserstoffrest mit 5 bis 10 Kohlenstoffatomen, einen aromatischen Kohlenwasserstoffrest mit 6 bis 12 Kohlenstoffatomen, eine Nitrilgruppe oder einen Ester-, Ether-, Amid-, Urethan-oder Ketogruppen enthaltenden einwertigen organischen Rest mit insgesamt 1 bis 6 Kohlenstoffatomen steht und

$R_5$ für einen gesättigten aliphatischen Kohlenwasserstoffrest mit 1 bis 18 Kohlenstoffatomen steht.

**4.** Zur oxidativen Vernetzung befähigte Polymere gemäß Anspruch 3, dadurch gekennzeichnet, daß

$R_1$ für einen gesättigten aliphatischen Kohlenwasserstoffrest mit 2 oder 3 Kohlenstoffatomen steht,

$R_2$ für einen einfach- und/oder mehrfach ungesättigten aliphatischen Kohlenwasserstoffrest mit 4 bis 20 Kohlenstoffatomen steht,

$R_3$ für Wasserstoff steht,

$R_4$ für einen Phenylrest steht und

$R_5$ für einen gesättigten aliphatischen Kohlenwasserstoffrest mit 1 bis 10 Kohlenstoffatomen steht.

**5.** Verfahren zur Herstellung von zur oxidativen Vernetzung befähigten Polymeren gemäß Anspruch 1,

dadruch gekennzeichnet, daß man

a) intramolekulare Carbonsäureanhydridgruppen der Formeln (VI) oder (VIa)

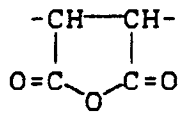

(VI)

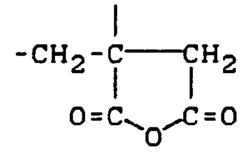

(VIa)

aufweisende Copolymerisate

des Molekulargewichts Mw 4500 bis 100 000 und eines Anhydridäquivalentgewichts von 240 bis 1960 von olefinisch ungesättigten, intramolekularen Carbonsäureanhydriden mit anderen olefinisch ungesättigten Monomeren

mit

b) im wesentlichen aus Hydroxyalkylamiden der Formel (VII)

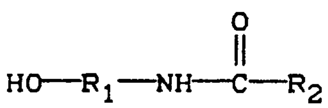

(VII)

bestehenden Umsetzungsprodukten aus Aminoalkoholen der Formel (VIII)

$HO\text{-}R_1\text{-}NH_2$ (VIII)

und Monocarbonsäuren der Formel (IX)

$R_2\text{-}COOH$ (IX)

bei 80 bis 200°C unter Imidbildung zur Reaktion bringt, wobei die Reaktionspartner in einem solchen Mengenverhältnis eingesetzt werden, das einem Molverhältnis von Anhydridgruppen der Komponente a) zu in der Komponenten b) organisch gebundenem Stickstoff von 1:0,5 bis 1:1,5 entspricht und wobei $R_1$ und $R_2$ die in Anspruch 1 genannte Bedeutung haben.

6. Verfahren gemäß Anspruch 5, dadurch gekennzeichnet, daß man als Komponente a) Copolymerisate von Maleinsäureanhydrid mit anderen olefinisch ungesättigten Monomeren verwendet.

7. Verfahren gemäß Anspruch 5 und 6, dadurch gekennzeichnet, daß man als Komponente a) ein in organischer Lösung hergestelltes Copolymerisat aus

a1) 14 bis 30 Gew.-% Maleinsäureanhydrid,

a2) insgesamt 15 bis 35 Gew.-% Styrol, und

a3) insgesamt 35 bis 65 Gew.-% n-Butylacrylat, 2-Ethylhexylacrylat, 2-Ethylhexylmethacrylat, Methylmethacrylat und/oder n-Butylmethacrylat

verwendet, wobei die Summe der genannten Prozentsätze 100 beträgt.

8. Verfahren gemäß Anspruch 7, dadurch gekennzeichnet, daß man als Komponente b) unter Wasserabspaltung hergestellte Umsetzungsprodukte von Aminoethanol und/oder Aminopropanol mit natürlichen, ungesättigten Fettsäuregemischen verwendet.

9. Verwendung der zur oxidativen Trocknung befähigten Polymeren gemäß Anspruch 1 bis 4 als Bindemittel oder Bindemittelkomponente für Beschichtungsmittel oder Dichtmassen.

## Claims

1. Polymers capable of oxidative crosslinking, characterized in that they contain 10 to 80% by weight structural units corresponding to formula (I) and/or (Ia):

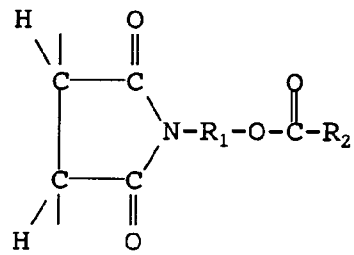

(I)

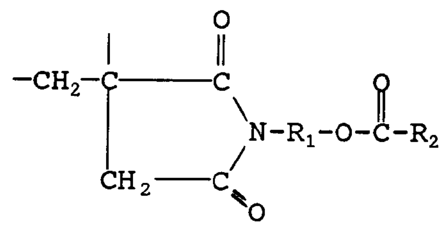

(Ia)

in which

$R_1$ is an aliphatic saturated hydrocarbon radical containing 2 to 6 carbon atoms, with the proviso that at least 2 carbon atoms are arranged between the nitrogen atom and the oxygen atom, and

$R_2$ at least 30% of the substituents $R_2$ are monoolefinically or polyolefinically unsaturated hydrocarbon radicals, the rest, i.e. up to 70% of the substituents $R_2$, being saturated aliphatic and/or aromatic hydrocarbon radicals which may optionally contain oxygen and/or nitrogen as hetero atoms in the form of ether, ester, keto, urethane, urea and/or amide groups, with the proviso that the content in the polymers of aliphatically unsaturated double bonds, expressed as C=C= (molecular weight = 24), present in the substituent $R_2$ is at least 2.0% by weight.

**2.** Polymers capable of oxidative crosslinking as claimed in claim 1, characterized in that they contain 30 to 66% by weight of structural unit I in which $R_1$ is an aliphatic, saturated hydrocarbon radical containing 2 or 3 carbon atoms and $R_2$ represents mono- and/or polyunsaturated hydrocarbon radicals containing 4 to 20 carbon atoms.

**3.** Polymers capable of oxidative crosslinking as claimed in claim 1, characterized in that they contain

a) 30 to 66% by weight recurring structural units corresponding to formula (I),

b) 3 to 30% by weight recurring structural units corresponding to formula (II):

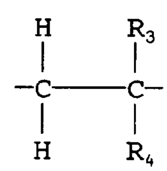

(II)

c) 15 to 67% by weight recurring structural units corresponding to formulae (III) and/or (IV):

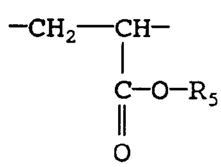

(III)

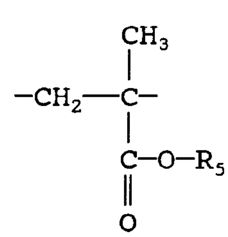

(IV)

and

d) 0 to 15% by weight structural units corresponding to formula (V):

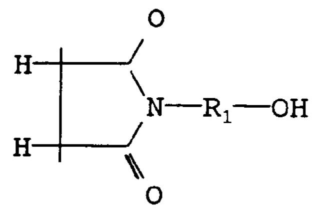

(V)

in which

$R_1$ and $R_2$ are as defined in claim 1,

$R_3$ is hydrogen, a methyl or ethyl group or fluorine or chlorine,

$R_4$ is a saturated aliphatic hydrocarbon radical containing 2 to 15 carbon atoms, a saturated cycloaliphatic hydrocarbon radical containing 5 to 10 carbon atoms, an aromatic hydrocarbon radical containing 6 to 12 carbon atoms, a nitrile group or a monofunctional organic $C_{1-6}$ radical containing ester, ether, amide, urethane or keto groups and

$R_5$ is a saturated aliphatic hydrocarbon radical containing 1 to 18 carbon atoms,

the percentages mentioned added up to 100.

**4.** Polymers capable of oxidative crosslinking as claimed in claim 3, characterized in that

$R_1$ is a saturated aliphatic hydrocarbon radical containing 2 or 3 carbon atoms,

$R_2$ is a mono- and/or polyunsaturated aliphatic hydrocarbon radical containing 4 to 20 carbon atoms,

$R_3$ is hydrogen,

$R_4$ is a phenyl group and

$R_5$ is a saturated aliphatic hydrocarbon radical containing 1 to 10 carbon atoms.

**5.** A process for the production of the polymers capable of oxidative crosslinking claimed in claim 1, characterized in that

a) copolymers - containing intramolecular carboxylic anhydride groups corresponding to formulae (VI) or (VIa):

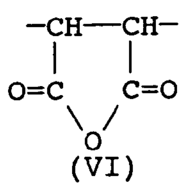

(VI)

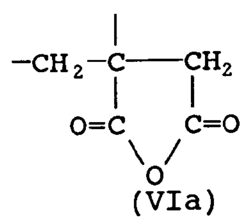

(VIa)

and having a molecular weight Mw of 4,500 to 100,000 and an anhydride equivalent weight of 240 to 1,960 - of olefinically unsaturated intramolecular weight carboxylic anhydrides with other olefinically unsaturated monomers

are reacted with

b) reaction products - consisting essentially of hydroxyalkylamides corresponding to formula (VII)

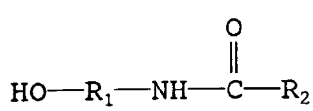

(VII)

- of aminoalcohols corresponding to formula (VIII)

$HO\text{-}R_1\text{-}NH_2$ (VIII)

and monocarboxylic acids corresponding to formula (IX)

$R_2\text{-}COOH$ (IX)

at 80 to 200°C with imide formation, the reactants being used in a quantitative ratio corresponding to a molar ratio of anhydride groups of component a) to nitrogen organically bound in component b) of 1:0.5 to 1:1.5 and $R_1$ and $R_2$ in formulae (VII) to (IX) being as defined above.

6. A process as claimed in claim 5, characterized in that copolymers of maleic anhydride with other olefinically unsaturated monomers are used as component a).

7. A process as claimed in claims 5 and 6, characterized in that a copolymer prepared in organic solution of
   a1) 14 to 30% by weight maleic anhydride,
   a2) a total of 15 to 35% by weight styrene and
   a3) a total of 35 to 65% by weight n-butyl acrylate, 2-ethyl hexyl acrylate, 2-ethyl hexyl methacrylate, methyl methacrylate and/or n-butyl methacrylate, the percentages shown adding up to 100,
   is used as component a).

8. A process as claimed in claim 7, characterized in that reaction products - prepared with elimination of water - of aminoethanol and/or aminopropanol with natural unsaturated fatty acid mixtures are used as component b).

9. The use of the polymers capable of oxidative drying claimed in claims 1 to 4 as binders or as a binder component for coating compounds or sealing compounds.

## Revendications

1. Polymères aptes à une réticulation par voie d'oxydation, caractérisés en ce qu'ils contiennent de 10 à 80% en poids d'unités de structure de formules (I) et/ou (Ia)

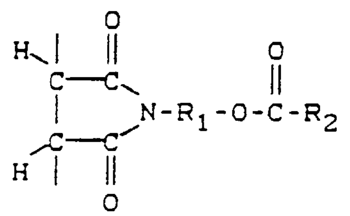

(I)

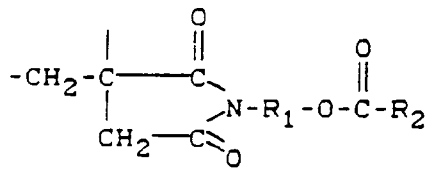

(Ia),

dans lesquelles

$R_1$ représente un radical d'hydrocarbure aliphatique saturé contenant de 2 à 6 atomes de carbone, avec cette mesure qu'entre l'atome d'azote et l'atome d'oxygène, sont disposés au moins 2 atomes de carbone, et

$R_2$ représente, au moins à concurrence de 30% des radicaux $R_2$, des radicaux d'hydrocarbures une ou plusieurs fois insaturés par voie oléfinique, et jusqu'à 70% des radicaux $R_2$, représente des radicaux d'hydrocarbures aliphatiques et/ou aromatiques saturés qui contiennent éventuellement un atome d'oxygène et/ou un atome d'azote comme hétéroatomes sous forme de groupes éther, ester, céto, uréthanne, urée et/ou amide, avec cette mesure que la teneur des polymères en liaisons doubles à insaturation oléfinique présentes dans le radical $R_2$, calculées comme =C=C= (poids moléculaire = 24), s'élève à au moins 2,0% en poids.

2. Polymères aptes à une réticulation par voie d'oxydation selon la revendication 1, caractérisés en ce qu'ils contiennent de 30 à 66% en poids de l'unité de structure I, dans lesquels $R_1$ représente un radical d'hydrocarbure aliphatique saturé contenant 2 ou 3 atomes de carbone, et $R_2$ représente des radicaux d'hydrocarbures une et/ou plusieurs fois insaturés contenant de 4 à 20 atomes de carbone.

**3.** Polymères aptes à une réticulation par voie d'oxydation selon la revendication 1, caractérisés en ce qu'ils contiennent

a) de 30 à 66% en poids d'unités de structure récurrentes de formule (I),

b) de 3 à 30% en poids d'unités de structure récurrentes de formule (II)

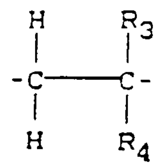

(II),

c) de 15 à 67% en poids d'unités de structure récurrentes de formule (III) et/ou (IV)

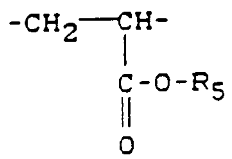

(III)

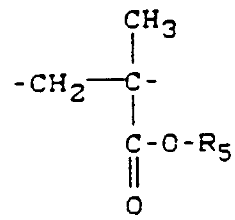

(IV)

et

d) de 0 à 15% en poids d'unités de structure de formule (V)

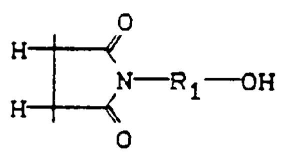

(V)

les pourcentages mentionnés se complétant pour donner 100 et, dans lesquels

$R_1$ et $R_2$ ont la signification mentionnée à la revendication 1,

$R_3$ représente un atome d'hydrogène, un groupe méthyle ou un groupe éthyle, ou bien un atome de fluor ou un atome de chlore,

$R_4$ représente un radical d'hydrocarbure aliphatique saturé contenant de 2 à 15 atomes de carbone, un radical d'hydrocarbure cycloaliphatique saturé contenant de 5 à 10 atomes de carbone, un radical d'hydrocarbure aromatique contenant de 6 à 12 atomes de carbone, un groupe nitrile ou encore un radical organique monovalent contenant des groupes ester, éther, amide, uréthanne ou céto, contenant au total de 1 à 6 atomes de carbone, et

$R_5$ représente un radical d'hydrocarbure aliphatique saturé contenant de 1 à 18 atomes de carbone.

**4.** Polymères aptes à une réticulation par voie d'oxydation selon la revendication 3, caractérisés en ce que

$R_1$ représente un radical d'hydrocarbure aliphatique saturé contenant 2 ou 3 atomes de carbone,

$R_2$ représente un radical d'hydrocarbure aliphatique une et/ou plusieurs fois insaturé contenant de 4 à 20 atomes de carbone,

$R_3$ représente un atome d'hydrogène,

$R_4$ représente un radical phényle, et

$R_5$ représente un radical d'hydrocarbure aliphatique saturé contenant de 1 à 10 atomes de carbone.

**5.** Procédé pour la préparation de polymères aptes à une réticulation par voie d'oxydation selon la revendication 1, caractérisés en ce qu'on amène à réagir

a) des copolymères présentant des groupes intramoléculaires d'anhydrides carboxyliques répondant aux formules (VI) ou (VIa)

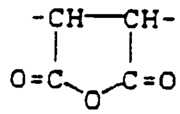

(VI)

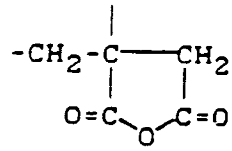

(VIa)

ayant un poids moléculaire Mw de 4500 à 100 000 et un poids d'équivalent anhydride de 240 à 1960, d'anhydrides carboxyliques intramoléculaires à insaturation oléfinique avec d'autres monomères à insaturation oléfinique,

avec

b) des produits réactionnels constitués essentiellement par des hydroxyalkylamides de formule (VII)

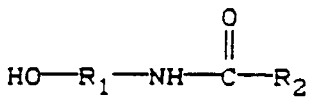

(VII)

provenant d'aminoalcools de formule (VIII)

$$HO\text{-}R_1\text{-}NH_2 \qquad (VIII)$$

et d'acides monocarboxyliques de formule (IX)

$$R_2\text{-}COOH \qquad (IX)$$

à une température de 80 à 200°C avec formation d'imide, les partenaires réactionnels étant mis en oeuvre dans une proportion telle qu'elle correspond à un rapport molaire des groupes anhydrides du composant a) à l'atome d'azote lié à un radical organique dans le composant b), de 1:0,5 à 1:5, et où $R_1$ et $R_2$ ont la signification mentionnée à la revendication 1.

**6.** Procédé selon la revendication 5, caractérisé en ce qu'on utilise, comme composant a), des copolymères d'anhydride maléique avec d'autres monomères à insaturation oléfinique.

**7.** Procédé selon les revendications 5 et 6, caractérisé en ce que, comme composant a), on utilise un copolymère préparé dans une solution organique, constitué par

$a_1$) de 14 à 30% en poids d'anhydride maléique,

$a_2$) au total, de 15 à 35% en poids de styrène, et

$a_3$) au total, de 35 à 65% en poids d'acrylate de n-butyle, d'acrylate de 2-éthylhexyle, de méthacrylate de 2-éthylhexyle, de méthacrylate de méthyle et/ou de méthacrylate de n-butyle,

la somme des pourcentages mentionnés s'élevant à 100.

**8.** Procédé selon la revendication 7, caractérisé en ce que, comme composant b), on utilise des produits réactionnels d'aminoéthanol et/ou d'aminopropanol avec des mélanges d'acides gras naturels insaturés, préparés en éliminant l'eau.

**9.** Utilisation des polymères aptes à un séchage par voie d'oxydation selon les revendications 1 à 4, comme liant, comme composant de liant pour des agents d'enduction ou des matières d'étanchéification.